# EUROPEAN PATENT APPLICATION

(11) **EP 2 712 250 A1**
(43) Date of publication of application: **26.03.2014**
(21) Application number: 12290305.7
(22) Date of filing: 19.09.2012
(51) Int. Cl.: H04W 72/04

(54) **A small cell base station, a macrocell base station controller, a telecommunications network, and a method of handover**

(71) Applicant: Alcatel Lucent, 75007 Paris (FR)
(72) Inventor: Puddle, Nicola, Swindon SN4 0ND, Wiltshire (GB); Brend, Graham R., Bath, BA1 7UE Somerset (GB); Warner, George M., Chippenham, SN15 1LJ, Wiltshire (GB)
(74) Representative: Sarup, David Alexander

(57) **Abstract**

A small cell base station is provided including resources for connection with user terminals and having a group of registered user terminals authorised to connect with the small cell base station; in which a first part of the resources arc for connection only with the registered user terminals; and a second part of the resources are for connection with at least one user terminal from a set comprising unregistered user terminals and the group of registered user terminals.

## Description

### Field of the Invention

The present invention relates to telecommunications, in particular to wireless telecommunications.

### Description of the Related Art

Wireless telecommunications systems are well-known. Many such systems are cellular in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the terms small cells and femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations are intended primarily for users belonging to a particular home or office. Femtocell base stations may be private access (also known as closed access), public access (also known as open access) or hybrid access. In femtocell base stations that are private access, access is restricted only to registered users, for example family members or particular groups of employees. In femtocell base stations that are public access, any user may access the femtocell base station. In hybrid access femtocell base stations, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations are sometimes referred to as femtos.

In order to alleviate or avoid overload conditions in macrocell base stations, it is known to allow any user terminals to access, in other words, connect to, femtocell base stations that have capacity. This is done for example by changing the access mode of a femtocell base station from closed access to hybrid access or even open access. Specifically, a change in access mode is indicated by changing the broadcast parameters that are broadcast by the femtocell base station so as to indicate, to user terminals in the femtocell, the access mode of the femtocell base station. In particular:
(a) Specifically, a closed access femtocell base station transmits both a Closed Subscriber Group (CSG) indicator in a broadcast information message known as the Master Information Block (MIB), and a CSG identity in a system information broadcast message, namely in System Information Block type3, often denoted SIB type 3.
(b) A hybrid access femtocell base station transmits a CSG identity in a system information broadcast message, namely in System Information Block type3, often denoted SIB type 3 but does not transmit a CSG indicator in a broadcast information message known as the Master Information Block (MIB).
(c) An open access femtocell base station broadcasts neither a CSG indicator nor a CSG identity.

A change in access mode is indicated to user terminals by inserting a value tag in the MIB indicating that the SIB3 should be re-read. From reading both MIB and SIB3 the access mode, closed, hybrid or open, is determined by the user terminal.

### Summary

The inventors realised that in the known approach whilst it is straight-forward to change the access mode of a femtocell base station from closed access to hybrid access or open access, that significantly impacts the resource utilisation of the femtocell base station. Specifically, all user terminals in the femtocell are able to connect to, and make use of, the femtocell base station using normal cell selection/reselection procedures and so use all the resources of the previously closed access femtocell base station. The inventors realised that this may adversely impact the members of the closed subscriber group (CSG) of the previously closed access femtocell base station, who may, for example, be denied access when the femtocell base station is at capacity due to handling other users' traffic. This may be annoying to member's of the CSG and so be undesirable.

The reader is referred to the appended independent claims. Some preferred features are laid out in the dependent claims.

An example of the present invention is a small cell base station including resources for connection with user terminals and having a group of registered user terminals authorised to connect with the small cell base station; in which a first part of the resources are for connection only with the registered user terminals; and a second part of the resources are for connection with any one or more user terminal from a set comprising unregistered user terminals and the group of registered user terminals.

Preferred embodiments enable unused resources of a closed access femtocell base station to be made use of. Preferred embodiments allow a telecommunications network operator to alleviate high loading of a macrocell base station using the resources of one or more neighbouring femtocell base stations within or near the macrocell coverage area. Preferably a neighbouring femtocell base station belongs to the same network as the macrocell base station or an equivalent network in a shared network environment.

Preferred embodiments involve information being provided in the handover command to the femtocell base station to indicate that the user terminal is accessing partitioned resources available to any user terminal in the set and hence the conventional check as to whether the user terminal is registered with the femtocell base station (in order to control access) is unnecessary.

Preferred embodiments enable resources of deployed femtocell base stations in a network to be utilised to alleviate overload in a network operator's macrocell network.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example radio network controller, femtocell base station and user terminal within the network shown in Figure 1, and
Figure 3 is a message sequence diagram illustrating messaging between the radio network controller, the macrocell base station, the user terminal, and the femtocell base station that are shown in Figure 2.

### Detailed Description

An overview of resource provisioning in this embodiment will be provided then an example network and its operation will be described.

### Resource Partitioning

The inventors realised that it would be possible to allow selective access to limited femtocell base station resources on the basis of resource partitioning. By partitioning we mean enabling a predetermined part of the resources of the closed access femtocell base station to be used by one or more user terminals that are not subscribers of the femtocell base station. This may be at specific periods or upon a trigger event occurring, for example upon macrocell base station overload or near-overload. At other times, all the femtocell base station's resources are for use only by user terminals that are in the closed subscriber group (CSG) of user terminals registered with the femtocell base station.

For example, in the case of a femtocell base station configured to support say four voice calls, resources for these can be 'partitioned', for example so that resources for three simultaneous voice calls are reserved for user terminals in the CSG only, but resources to support one call are available to any user terminal, whether a member of the CSG or not. This means user terminals that are members of the CSG can use up to four lots of voice call resources, but if all these are not being used by members of the CSG then resources for one call may be used by a user terminal that is not a member of the CSG.

An example network in which this occurs will now be described.

### Network

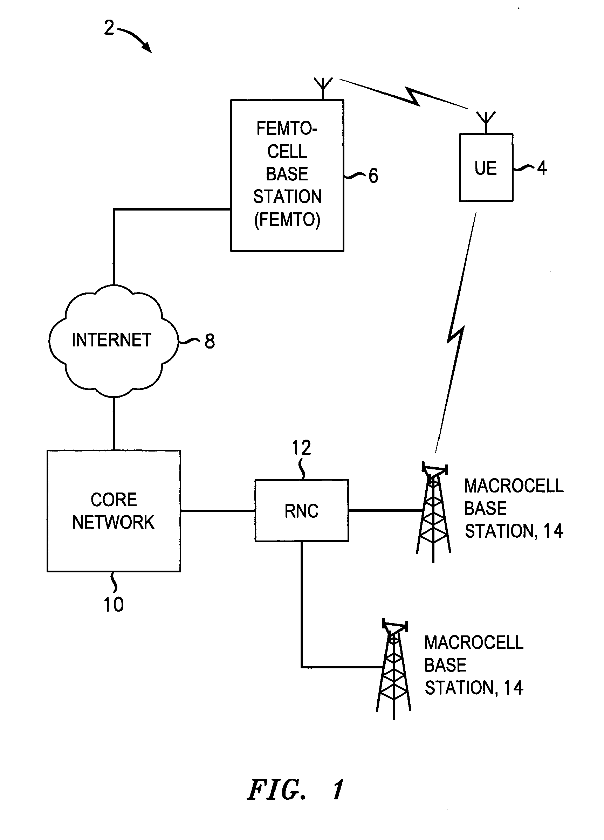

As shown in Figure 1, the network 2 includes femtocell base stations 6 (one of which is shown for simplicity), and mobile user terminals 4 (one of which is shown for simplicity denoted UE (user equipment)). Each femtocell base station 6 is connected via the Internet 8 to a telecommunications core network 10. The Core network 10 is connected to a Universal Mobile Telecommunications System (UMTS) radio network controller (RNC) 12 which is connected to several multiple macrocell base stations 14 (two of which are shown for simplicity). The RNC 12 is operative to control the macrocell base stations that are directly connected to the RNC 12.

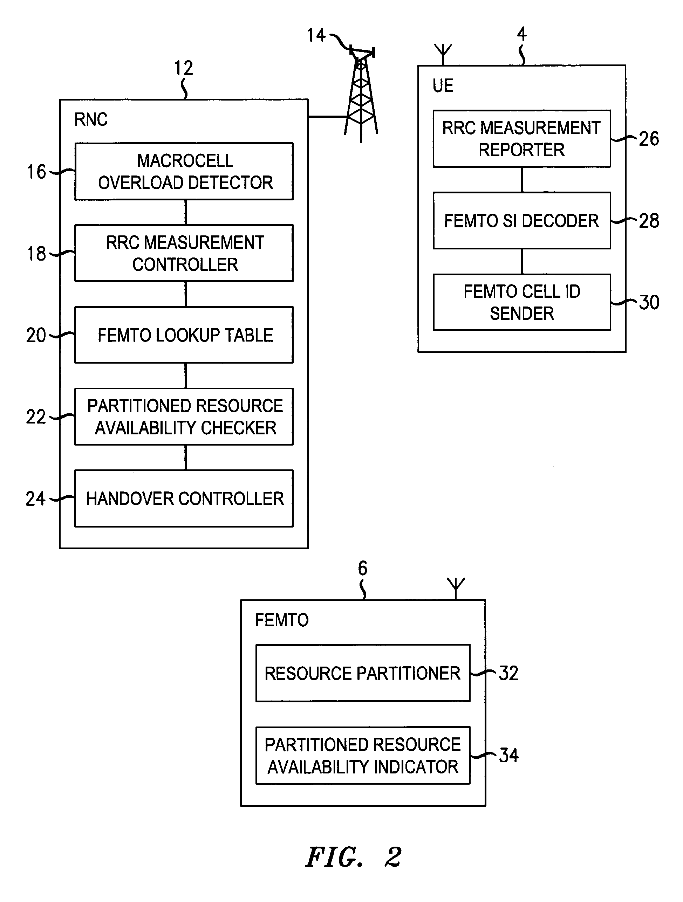

As shown in Figure 2, the radio network controller 12 includes a macrocell overload detector 16, a Radio Resource Control (RRC) measurement controller 18, a femto-lookup table 20, a partitioned resource availability checker 22 and a handover controller 24.

As also shown in Figure 2, the user terminal 4 includes an RRC measurement reporter 26, a femto system information (SI) decoder 28, and a femto Cell ID sender 30. Furthermore, the femto 6 includes a resource partitioner 32 and a partitioned resource availability indicator 34.

### Operation

Basically speaking, resource information is passed between closed access femtos and macrocell base stations, in the form of additional control messages or Information Elements (IEs) in control messages. A controller of a macrocell base station may query a neighbouring femtocell base station to determine whether the femtocell base station has available resource to allow the macrocell base station to handover one or more calls with user terminals that are not registered with the femtocell base station, so as to reduce the loading on the macrocell base station, hence alleviating potential overload of the macrocell base station. If the femtocell base station has resources available, the femtocell base station only indicates that resource is available up to the partitioned resource limit. This is so that members of the CSG may still have good access to the femtocell base station should they require that.

The user terminals that are not members of the femto's CSG belong to the same Public Land Mobile Network (PLMN) as the femto, or an equivalent PLMN where the femto broadcasts multiple PLMN identifiers as occurs in a shared network.

In this example the partitioned limit is resource for one voice call provided that that resource is available, in other words, not already in use by a CSG member.

Once the controller of the macrocell base station receives the response and determines that use can be made of the fcmto for a call with a user terminal in the femtocell coverage area that is not a member of the CSG, then handover is made from the macrocell base station to the femtocell base station. Information is sent with the handover command to indicate that the user terminal is allowed access to the available partitioned resources. In consequence, a check on whether the user terminal is a member of the CSG is not necessary, so is not undertaken.

### Operation in more Detail

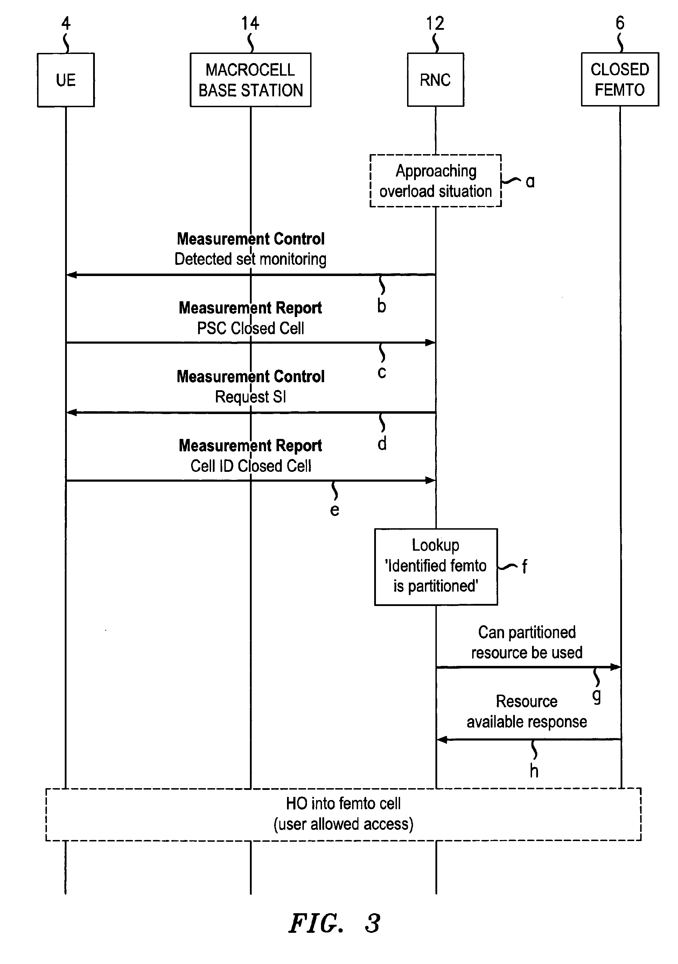

One example of this operation is shown in Figure 3 where the apparatus performing that operation is shown in Figure 2. This is a scenario in which the RNC 12 that controls several macrocell base stations 14 detects that one of those macrocell base stations 14 is near overload so attempts to make use of partitioned resources of a closed cell femtocell base station 6 to alleviate that overload.

As shown in Figure 3, the RNC 12 detects near-overload (step a) of a macrocell that it controls using its macrocell overload detector 16. Accordingly, the RRC measurement controller 18 of the RNC 12 sends (step b) a Radio Resource Control (RRC) message requesting the user terminal 4 to perform measurements of received signal strength of cells that the user terminal detects. The measurements are selected to be intra-frequency, in other words at the same radio frequencies as used by the macrocell base station, or inter-frequency, in other words at other radio frequencies, depending on what radio frequency the femtocell base stations use.

The user terminal 4 conducts the measurements and sends (step c) from its RRC measurement reporter 26 a measurement report which includes an indication that the user terminal 4 detects the closed access femto 6. This indication is the Primary Scrambling Code (PSC) of the closed access femto 6. The measurement report is received by the macrocell base station 14 and forwarded to its RNC 12.

The RNC 12 then sends (step d) a request via the macrocell base station 14 for the user terminal to read the system information (SI) that is broadcast by the femtocell base station 6. This request is in the form of an RRC measurement control message. This is so as to enable the RNC to unambiguously identify the femto 6.

The user terminal reads the system information in its femto-SI-decoder 28 and extracts from that the unique cell identifier, Cell ID. The CellID sender 30 of the user terminal 4 then sends (step e) the fcmtocell base station identifier, Cell ID, to the RNC 12 via the macrocell base station 14. This is done in a further RRC measurement report message.

The RNC 12 then recognises (step f) the closed access femtocell base station as one that can have partitioned resources available for user terminals that are not members of the femto's closed subscriber group. This is done by comparing the received Cell ID with data about fcmtos previously stored in a lookup table 20 in the RNC 12. This data about the femtocell base station 6 was previously provisioned on the RNC, for example by being provided to the RNC 12 when the neighbour cell relationship was established between the macrocell base station 14 controlled by the RNC 12 and the femtocell base station 6.

The RNC 12 then initiates (step g) a query to the identified femtocell base station 6 to check whether the partitioned resources are currently available for the RNC 12 to make use of The femtocell base station 6 makes the check, and if yes, responds (step h) that the resources are available up to its partitioned limit.

The RNC 12 then controls the macrocell base station 14 to perform a handover of the connection with the user terminal 4 to the femtocell base station 6. The messages involved in the handover including an indication to the femtocell base station 6 that the user terminal 4 need not be subjected to the usual checks on whether the user terminal 4 is a member of the CSG.

### Some Variants

In an otherwise similar example, the closed access femtocell base station broadcasts an indication of being open access but with an indication that the resources are limited for user terminals that are not members of the femtocell base station's closed subscriber group. This may be included in broadcast information only for short periods when the partitioned portion of the resources is not in use and so available.

In the embodiment described above with reference to the Figures, the user terminals that are not members of the femto's CSG belong to the same Public Land Mobile Network (PLMN) as the femto, or an equivalent PLMN where the femto broadcasts multiple PLMN identifiers as occurs in a shared network. However, in an otherwise similar example, user terminals that are not members of the femto's CSG but belong to the same Public Land Mobile Network (PLMN) as the femto may be allowed access. In other words, only user terminals that subscribe to the same network operator as the femto are able to utilised the femto's partitioned resource. In this example, user terminals subscribing to equivalent PLMNs where the femto broadcasts multiple PLMN identifiers, as occurs in a shared network, are not allowed to use the femto's resources.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A small cell base station including resources for connection with user terminals and having a group of registered user terminals authorised to connect with the small cell base station; in which a first part of the resources are for connection only with the registered user terminals; and a second part of the resources are for connection with at any one or more user terminal from a set comprising unregistered user terminals and the group of registered user terminals.

2. A small cell base station according to claim 1, comprising an indicator operable to indicate whether the second part of the resources is currently available for connection with at least one user terminal from a set comprising unregistered user terminals and the group of registered user terminals.

3. A small cell base station according to claim 1 or claim 2, having resources for simultaneous voice calls, the first part of the resources being sufficient for at least one voice call, and the second part of the resources being sufficient for at least one voice call.

4. A small cell base station according to any preceding claim, configured to broadcast an indication of being open access limited to only part of its resources for connections with user terminals being available to unregistered user terminals.

5. A small cell base station according to any preceding claim, in which the registered user terminals comprise a Closed Subscriber Group, CSG.

6. A macrocell base station controller configured to detect an overload or near-overload condition of the macrocell base station and configured to instruct a user terminal in the macrocell to detect a small cell base station, the user terminal not being registered with the small cell base station, the macrocell base station controller also being configured to check whether the small cell base station detected by the user terminal is according to claim 1, and configured to check whether the small cell base station has resources currently available for connection with the user terminal.

7. A macrocell base station controller according to claim 6, in which the macrocell base station is configured to check whether the small cell base station detected by the user terminal is according to claim 1 by inspecting a lookup table of information of small cell base stations using a received identifier of the small cell base station.

8. A macrocell base station controller according to claim 6 or claim 7, which is a Radio Network Controller, RNC.

9. A telecommunications network comprising the small cell base station according to claim 1, a macrocell base station and the macrocell base station controller according to claim 6.

10. A telecommunications network according to claim 9, in which unregistered user terminals belong to the same Public Land Mobile Network, PLMN, as the registered user terminals, or an equivalent PLMN to the registered user terminals.

11. A method of handover of a user terminal's connection with a macrocell base station to connection with a small cell base station, the user terminal not being registered with the small cell base station, the method comprising:
identifying the small cell base station within the radio coverage area of which the user terminal is located,
determining that the small cell base station is selectably connectable either with only user terminals registered with the small cell base station or with any one or more user terminals of a set comprising the registered user terminals and at least one unregistered user terminal,
dependent upon that determination checking that the small cell base station currently has resources available for connection with an unregistered user terminal,
and dependent upon the result of that check handing over the connection with the user terminal from connection with the macrocell base station to connection with the small cell base station.

12. A method according to claim 11, triggered by detection of an overload condition or a near-overload condition of the macrocell base station.

13. A method according to claim 11 or claim 12, in which said identifying is by a user terminal in the macrocell detecting the small cell base station and obtaining an identifier of the small cell base station.

14. A method according to claim 13, in which said determining is by inspection of records using the identifier to establish whether the small cell base station is one that is selectably connectable with only user terminals registered with the small cell base station or any one or more user terminal of the set comprising the registered user terminals and the at least one unregistered user terminal.

15. A method according to any of claims 11 to 14, in which said handover includes sending a handover command to the small cell base station that includes an indication that the user terminal is to be allowed to connect to the small cell base station despite not being registered with the small cell base station.

## Amended claims

### Amended claims in accordance with Rule 137(2) EPC.

**1.** A method of handover of a user terminal's connection with a macrocell base station (14) to connection with a small cell base station (6), the user terminal (4) not being registered with the small cell base station, the method comprising:
identifying the small cell base station within the radio coverage area of which the user terminal is located,
determining (Fig 3:f) that the small cell base station is selectably connectable either with only user terminals registered with the small cell base station or with any one or more user terminals of a set comprising the registered user terminals and at least one unregistered user terminal,
dependent upon that determination checking (Fig 3:g) that the small cell base station currently has resources available for connection with an unregistered user terminal,
and dependent upon the result (Fig 3:h) of that check handing over the connection with the user terminal from connection with the macrocell base station to connection with the small cell base station.

**2.** A method according to claim 1, triggered by detection of an overload condition or a near-overload condition (Fig 3:a) of the macrocell base station.

**3.** A method according to claim 1 or claim 2, in which said identifying is by a user terminal in the macrocell detecting the small cell base station and obtaining an identifier (28) of the small cell base station.

**4.** A method according to claim 3, in which said determining is by inspection of records (20) using the identifier to establish whether the small cell base station is one that is selectably connectable with only user terminals registered with the small cell base station or any one or more user terminal of the set comprising the registered user terminals and the at least one unregistered user terminal.

**5.** A method according to any of claims 1 to 4, in which said handover includes sending a handover command to the small cell base station that includes an indication that the user terminal is to be allowed to connect to the small cell base station despite not being registered with the small cell base station.

**6.** A macrocell base station controller (12) configured to detect an overload or near-overload condition of the macrocell base station (14) and configured to instruct (Fig 3:b,d) a user terminal (4) in the macrocell to detect a small cell base station; the user terminal not being registered with the small cell base station; the macrocell base station controller also being configured to check whether the small cell base station detected by the user terminal is a small cell base station (6) including resources for connection with user terminals and having a group of registered user terminals authorised to connect with the small cell base station, in which a first part of the resources are for connection only with the registered user terminals, and a second part of the resources are for connection with at any one or more user terminal from a set comprising unregistered user terminals and the group of registered user terminals; and the macrocell base station controller is configured to check, whether the small cell base station has resources currently available for connection with the (22) unregistered user terminal, and is configured to, dependent upon the result of that check, handover (24) the connection with the user terminal from connection with the macrocell base station base station to connection with the small cell base station.

**7.** A macrocell base station controller according to claim 6, in which the macrocell base station is configured to check whether the small cell base station detected by the user terminal is according to claim 1 by inspecting a lookup table of information of small cell base stations using a received identifier of the small cell base station.

**8.** A macrocell base station controller according to claim 6 or claim 7, which is a Radio Network Controller, RNC.
